# EUROPEAN PATENT SPECIFICATION

(11) **EP 0 467 014 B1**
(45) Date of publication and mention of the grant of the patent: **04.08.1999**
(21) Application number: 91103705.9
(22) Date of filing: 11.03.1991
(51) Int. Cl.: G06K 7/10, G06K 15/00, G01G 19/40, G07G 1/12

(54) **Arrangement for a point-of sale site**
Einrichtung für eine Verkaufsstelle
Dispositif pour l'emplacement d'un point de vente

(30) Priority: 16.07.1990 US 553558
(43) Date of publication of application: 22.01.1992
(60) Divisional application: 98200515.9
(73) Proprietor: SYMBOL TECHNOLOGIES, INC., Bohemia New York 11716-3300 (US)
(72) Inventor: Swartz, Jerome, Old Field, New York 11733 (US)
(74) Representative: Maggs, Michael Norman

(56) References cited:
- EP-A- 0 199 252
- EP-A- 0 341 717
- US-A- 4 372 741
- US-A- 4 766 297
- US-A- 4 879 650
- Monarch Marking: "Pathfinder", 1984
- Monarch Marking: "Model 6000, Portable, Electronic Controlled Label Printing System", 1983

## Description

This invention generally relates to an arrangement for processing products and, more particularly, to a point-of-sale (POS) system including a scanner for electro-optically scanning a target, e.g. a bar code symbol on a label applied to a product.

Targets having indicia of different light reflectivity,such as bar code symbols printed on labels affixed to products, have been electro-optically scanned by directing laser beams to symbols for reflection therefrom. A portion of the reflected laser beam for each symbol was collected by a photodetector having a finite field of view. Each symbol and/or the field of view was scanned by different scan patterns including, but not limited to, a single scan line, a set of generally parallel scan lines, two sets of intersecting parallel scan lines, multiple intersecting scan lines, Lissajous scan patterns, holographic scan patterns, omnidirectional scan patterns, etc.

Once a product having a symbol-bearing label has been scanned and identified, information such as price relating to the identified product is retrieved from a data base of a host computer. This information is then used, for example, at a supermarket checkout counter to indicate the price of the identified product to a customer.

Although generally satisfactory for its intended purpose, some customers wish to know the price of a product before standing in line at the checkout counter. To assist the customer, some stores post price signs in the vicinity of the products for sale on supermarket shelves. However, those signs are sometimes removed and not replaced on the shelves. More often, the price information is outdated from one day to the next due to price increases or special promotion sales. The only reliable price information is obtained typically only at the checkout counter and, as previously noted, many customers would like to know the price beforehand.

For certain items, for example, meats, fish, vegetables, fruits, etc., whose actual price is a function of weight, the only scale which is determinative of the actual price is the one at the checkout counter. Other in-store scales typically provide guidance only as to the approximate weight of the products. Here, again, it would be desirable for the customer to know the price of the products to be purchased before checking out.

Expediting checkout is also desirable in crowded supermarkets. The aforementioned items that have to be weighed at the checkout counter slow the checkout procedure. It would be desirable to apply machine-readable coded labels to such items in advance of checkout so that they may be automatically read at checkout. Supermarkets often have separate in-store specialty counters, e.g. an appetizing counter, where foodstuffs are weighed and labeled with a price dependent on weight. The foodstuff is identified by manual entry of a numerical code at a keyboard. Such manual entry is prone to human error, with the result that the wrong code and foodstuff is identified.

With respect to the prior art, further attention is drawn to US-A-4,879,650 which discloses a point-of-sale register system including an electronic cash register connected to a central inventory control unit to serve as a terminal device of a point-of-sale system, an optical scanner and a weighing machine. Thus, US-A-4,879,650 discloses an arrangement for processing products at a point-of-sale site, comprising:
(a) a host computer having a database in which price per unit weight information relating to the products is stored;
(b) scale means for weighing a selected one of the products;
(c) and a scanning means for scanning the selected one of the products;
(d) means for electro-optically reading indicia having parts of different light reflectivity associated with said selected one of the products being weighed to identify the latter;
(e) means for interrogating the database of the host computer on a real-time basis for the price per unit weight information on the identified product; and
(f) means for printing out price information based on the weight of the product as measured by the scale means and the price per unit weight information obtained from the host computer.

From US-A-4,766,297 a scanning system for reading bar code symbols is known. This scanning system includes a portable hand-held scanning device and a fixture for receiving and supporting the portable hand-held scanning device.

EP-A-0199252 discloses a desk-top but also a portable thermal label printer coupled to a hand-held stylus for reading label information on products.

It is known to provide hand-held instruments including an optical character reader, and a printer for printing product information onto a tangible medium, the hand-held instrument being coupled to a computing network. Examples of such instruments are disclosed in US-A-4,377,741 and brochures "Monarch Marking - Model 6000" - 1983 and "Monarch Marking - Pathfinder" - 1984.

It is an object of the present invention to provide an arrangement for processing products at a point-of-sale site which is compact and flexible in use.

Accordingly, the invention provides an arrangement for processing products at a point-of-sale site, comprising:
(a) a host computer having a database in which price per unit weight information relating to the products is stored;
(b) scale means for weighing a selected one of the products;
(c) and a scanning means for scanning the selected one of the products;
(d) means for electro-optically reading indicia having parts of different light reflectivity associated with said selected one of the products being weighed to identify the latter;
(e) means for interrogating the database of the host computer on a real-time basis for the price per unit weight information on the identified product;
(f) means for printing out price information based on the weight of the product as measured by the scale means and the price per unit weight information obtained from the host computer;
characterised in that:
the scanning means is a hand held or hand movable scanning head which comprises:
said product identifying means;
said database interrogating means; and
said printing means, which latter is operative to print said price information on a label;
the scanning head further comprises edge means disposed at the exterior of the scanning head means for use in removing said label from the scanning head means and applying the same to the selected one of the products.

The invention includes storing price per unit weight information relating to inventory products in a data base of a host computer, and periodically updating such information relating to the products as circumstances, e.g. price increases or decreases, warrant. Each of the products is identified by electro-optically reading indicia thereon having parts of different light reflectivity. In a preferred embodiment, the indicia are bar code symbols printed on labels affixed to, or otherwise associated with, the products.

Each time a product has been identified, the host computer is interrogated on a real-time basis for the updated information. If updated information is available, an updated label is printed, the updated label containing the updated information in human-readable and/or machine-readable form. The updated label is thereupon applied to the identified product.

This invention contemplates weighing the identified product prior to interrogating the host computer. Thus, the updated label is printed with the weight and price information for application to the identified product prior to checkout.

The electro-optical reading of the symbol is performed by a hand-held or hand movable head supported by a retail clerk, and aimable at each symbol during reading. Within the head are mounted means for directing a light beam, preferably a laser beam, to the symbol, means for detecting at least a portion of light of variable intensity reflected off each symbol over a field of view, means for scanning at least one of said laser beam and said field of view, and means for processing electrical signals indicative of the detected light intensity into data identifying the product bearing the symbol.

Rather than a hand-held head, all of the aforementioned means can be incorporated in a hand movable head of a desktop, stand-alone workstation. The head may be connected, in a preferred embodiment, to one end of an arm that is bendable in order to position the head in a desired orientation.

The printing of the updated label may be performed by a printer on-board the head.

In a preferred embodiment, the printer is a thermal printer that is powered by a re-usable, rechargeable battery. The printer advantageously prints on leading portions of a paper roll of tear-off labels not only the aforementioned price information, but also sequence numbers indicative of the number-of times that the printer has printed labels -- a feature useful in preventing pilferage.

The electro-optical reading of a bar code symbol uniquely associated with each product insures that incorrect product identification by manual entry of an incorrect numerical code at a keyboard is reliably prevented.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 is a sectional view of a hand-held head together with a host computer for use in the present invention;
FIG. 2 is a perspective view of the arrangement of FIG. 1 in use;
FIG. 3 is a diagrammatic side view of another arrangement for processing products according to this invention;
FIG. 4 is a diagrammatic side view of an additional arrangement for processing products according to this invention;
FIG. 5 is a diagrammatic side view of a further arrangement for processing products according to this invention;
FIG. 6 is a block diagram showing a host computer serving multiple scanning workstations; and
FIG. 7 is a front perspective view of an arrangement according to this invention in use at a retail point-of-sale location.

### DETAILED DESCRIPTION OF THE PREFERRED EMBODIMENTS

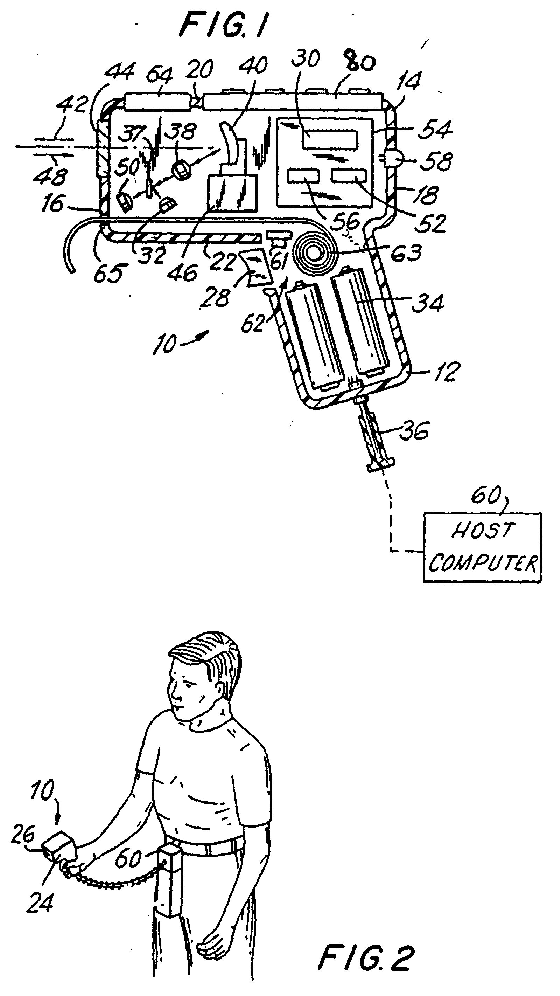

Referring now to FIG. 1 of the drawings, *ref*erence numeral 10 generally identifies a lightweight (less than 0.45 kg (1 lb.)), narrow-bodied, streamlined, hand-held, fully-portable, easy-to-manipulate, non-arm-and wrist-fatiguing, scanning head supportable entirely by an operator for use in a scanning system operative for reading, scanning and/or analyzing symbols, and aimable, both prior to and during reading thereof, by the operator at the symbol, each symbol in its turn. The term "symbol" as used herein is intended to cover indicia composed of parts having different light-reflective properties. The indicia may be industrial symbols, e.g. Code 30, Codabar, Interleaved 2 or 5, etc., or the omnipresent Universal Product Code (UPC) bar code symbol. The indicia may also be composed of alphabetic and/or numeric characters.

The head 10 includes a generally gun-shaped housing having a handle portion 12 of generally rectangular cross-section, and a generally horizontally-elongated, narrow-bodied barrel or body portion 14. The dimensions and overall size of the handle portion 12 are such that the head 10 can conveniently fit and be held in the operator's hand. The body and handle portions are constituted of a lightweight, resilient, shock-resistant, self-supporting material such as a synthetic plastic material. The plastic housing is preferably injection-molded and forms a thin, hollow shell whose interior space measures less than a volume on the order of 820 cm³ (50 cu.in.)

As considered in an intended position of use, as shown in FIG. 2, the body portion 14 has a front wall 16, a rear wall 18 spaced rearwardly of the front wall, a top wall 20, a bottom wall 22 below the top wall, and a pair of opposed side walls 24, 26 that lie in mutual parallelism between the top and bottom walls.

A manually-actuatable, and preferably depressible, trigger 28 is mounted for pivoting movement about a pivot axis on the head in a forwardly-facing region where the handle and body portions meet and where the operator's forefinger normally lies when the operator grips the handle portion in the intended position of use.

A plurality of components are mounted in the head and, as explained below, at least some of them are actuated by the trigger 28, either directly or indirectly, by means of a control microprocessor 30. One of the head components is an actuatable light source, e.g. a semiconductor laser diode 32 or a light emitting diode, operative, when actuated by the trigger 28, for propagating and generating an incident light beam. In the case of a laser, the light beam is highly divergent, is non-radially symmetrical, is generally oval in cross-section, and has a wavelength above 700·10⁻⁶ mm (7000 Angstrom units). The laser diode 32 may be of the continuous wave or pulse type. The diode 32 requires a low voltage, e.g. 12 volts DC or less, supplied by a battery 34 which may be provided within the handle portion 12 or by a rechargeable battery pack accessory detachably mounted on the head, or by a power conductor in a cable connected to the head from an external power supply.

An optical assembly, including a half-silvered mirror 37 and an optical train 38, is mounted in the head, and is adjustably positioned relative to the diode 32 for optically modifying and directing the incident laser beam along a first optical path toward a reference plane which is located exteriorly of the head forwardly of the front wall 16 and which lies generally perpendicular to the longitudional direction along which the incident. laser beam propagates. A symbol to be read is located at the vicinity of the reference plane, either at or at one side, or at an opposite side,of the reference plane, that is, anywhere within the depth of focus or field of the optically-modified incident laser beam. The depth of focus or field is also known as the working distance in which the symbols can be read. The incident laser beam reflects off each symbol in many directions, and that portion of the reflected laser light which travels away from the symbol back toward the head is known herein as the returning portion.

The laser beam passing through the optical train 38 impinges on a generally planar portion of a scanning mirror 40 for reflection therefrom. The scanning mirror 40 forwardly reflects the laser beam impinging thereon in the direction of an arrow 42 through a forwardly-facing light-transmissive window 44 mounted on the front wall 16 and to the symbol.

The scanning mirror 40 is mounted on a scanning component, preferably a high-speed scanner motor 46 of the type shown and described in U.S. Pat. No.4,387,397. The motor 46 has an output shaft on which a support bracket is fixedly mounted. The scanning mirror 40 is fixedly mounted on the bracket and is driven in alternate circumferential directions over arc lengths of any desired size, typically less than 360°, and at a rate of speed on the order of a plurality of oscillations per second. In a preferred embodiment, the scanning mirror 40 and the shaft are reciprocally and repetitively oscillated so that the scanning mirror repetitively sweeps the incident laser beam impinging on the mirror through an angular distance or arc length at the reference plane of about 32° and at a rate of about 20 scans or 40 oscillations per second.

The returning portion of the reflected laser light has a variable light intensity due to the different light-reflective properties of the various parts that comprise the symbol over the symbol during the scan. The returning portion of the reflected laser light is collected in the direction of arrow 48 by a generally concave spherical portion of the mirror 40. The generally planar mirror portion is integrally attached to the generally spherical mirror portion of the mirror 40. The spherical portion reflects the collected light through the optical train 38, the half-silvered mirror 37, and to a sensor means, e.g.. a photosensor 50. The photosensor 50, preferably a photodiode, detects the variable intensity of the collected laser light over a field of view which extends along, and preferably beyond, the scan, and generates an electrical analog signal indicative of the detected variable light intensity.

Also mounted in the head is signal processing means 52 mounted on a circuit board 54, and operative for processing the analog electrical signal generated by the photodiode 50 into a digitized video signal. Data descriptive of the symbol can be derived from the video signal. Suitable signal processing circuitry for this purpose was described in U.S. Pat. No. 4,251,798. Other components within the head include drive circuitry for the motor 46, an aiming light controller in the event that the laser diode 32 generates a laser beam which is not readily visible to the human eye, and a voltage converter for converting incoming voltage, e.g. from the battery 34, to a regulated voltage suitable for energizing the laser diode 32.

Also mounted on the circuit board 54 is a decode/control means 56 operative for decoding the digitized video signal to a digitized decoded signal from which the desired data descriptive of the symbol is obtained in accordance with an algorithm contained in a software control program in the microprocessor 30. The decode/control means includes a PROM for holding the control program, and an RAM for temporary data storage. The decode/control means 56, together with the microprocessor, determine when a successful decoding of the symbol has been obtained,and also terminates the reading of the symbol upon the determination of the successful decoding thereof. The initiation of the reading is caused by depression of the trigger 28. The decode/ control means also includes control circuitry for controlling the actuation of the actuatable components in the head, namely, the laser diode 32, the photodiode 50, the motor 46, and all the other electronic subcircuits therein, as initiated by the trigger, as well as for communicating with the user that the reading has been automatically terminated as, for example, by sending a control signal to an indicator lamp 58 to illuminate the same or by energizing a buzzer or beeper.

The decoded signal is either conducted along a conductor within a cable interconnected between the head and a remote host computer 60, or is transmitted by radio wave from the head to the computer 60 by means of antenna 36. The computer 60 serves essentially as a large data base, may be an in-store processor, stores the decoded signal, and provides information related to the decoded signal. For example, the host computer, in accordance with this invention, can provide retail price information on an updated basis corresponding to the products identified by their decoded symbols. The host computer can advantageously be incorporated in a portable terminal, or in a stationary terminal such as a cash register.

A keyboard 80 may advantageously be provided on the head for entering data relating to the symbol and/or the product bearing the same. A display 64 is also conveniently mounted adjacent the keyboard 80 on the top wall 20 of the head, and is operative for displaying information relating to the symbol and/or the product bearing the same.

As described so far, each product bearing a label imprinted with a symbol is identified by scanning the symbol with the hand-held scanner head 10. Information such as price is retrieved on a real-time basis from the data base of the host computer 60. The stored information is periodically updated, for example, by keyboard entry, to reflect price increases or decreases. The data base can be incorporated in a portable housing held in one's other hand, or supported on the operator's person, for example, suspended from a belt or shoulder strap, in a field-portable application.

In the event that the information stored in the data base has been updated, an updated label with machine-readable and/or human-readable data reflecting the updated information is printed. The printer includes a thermal printhead 61 operative for thermally imprinting graphical markings on a journaled roll 63 of paper labels, each printed label being torn off the roll by being urged against tear-off edge 65 at the front of the head 10. The updated label preferably has a pressure-adhesive backing so that it can be applied directly on the product, either adjacent to, or preferably as an overlay to, the existing label on the product.

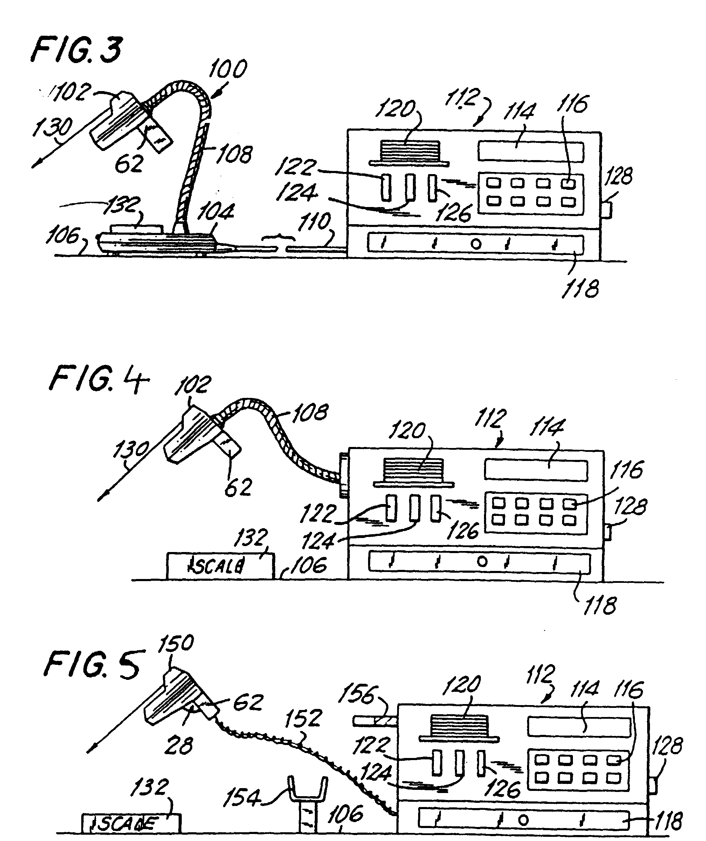

Turning now to FIG. 3, most or all of the components shown within the hand-held head 10 of FIG. 1 can be mounted within a workstation 100 having a head 102, a base 104 supported on a counter top or like support surface 106, and an adjustable gooseneck-like conduit or arm 108, one end of which is connected to the head 102, and the opposite end of which is connected to the base 104. The trigger 28 can be eliminated. The arm 108 is hollow so that electrical wires can be routed therethrough to conduct electrical signals to and away from the components within the head 102. The arm is constituted of a semi-rigid, metal material capable of being repeatedly manually bent to a selected orientation and, when so bent, capable of staying in said selected orientation until re-bent by an operator to another orientation. By bending the arm, the head 102 is infinitely adjustably positioned relative to a symbol located in the vicinity of a work surface exteriorly of the scanner. The work surface or reference plane can be located at, or slightly above, the plane of the countertop 106, or can be located at, or slightly above, the plane of the upper surface of the base 104.

An electrical cable 110 connects the workstation to a terminal 112 which is shown, for convenience, as a cash register in a POS installation. The terminal 112 has a display 114 for displaying information, including data descriptive of the symbol being scanned, to an operator; a keyboard 116 for enabling the operator to manually enter information, including data descriptive of the symbol being scanned; a cash drawer 118 for holding money; a paper tape 120 for recording information and providing a receipt to a customer of the purchase of an object bearing the symbol being scanned; a recharger 122 for recharging and supplying electrical power to a battery mounted either within the base 104 or the head 102; a decode module 124 (in case the decode module is not located within the base 104, arm 108, or head 102); and a data base 126 of a host computer. A connector 128 can be used to download the stored data to another data base.

The entire installation shown in FIG. 3 is known as an intelligent terminal. The arm 108 can be manipulated with multiple degrees of freedom of movement to insure that the exiting laser beam (depicted by the arrow 130) strikes the symbol and/or the returning reflected light is collected from the symbol.

The laser scanning head 100 of FIG. 3 is of the retro-reflective type wherein the outgoing incident laser beam, as well as the field of view of the sensor means, are scanned. It will be readily understood that other variants also are possible.

For example, the outgoing incident laser beam can be directed to, and swept across, the symbol through one window on the head, while the field of view is not scanned and the returning laser light is collected through another window on the head. Also, the outgoing incident beam can be directed to, but not swept across, the symbol, while the field of view is scanned.

The printer 62 is incorporated within the head. As shown in FIG. 3, the printer 62 is situated within a downward handle-like extension of the head.

A weighing scale 132 is incorporated within the base 104, and is operative for weighing a product placed on a weighing platform. A product such as meat or fish, whose price is a function of weight, is placed on the platform and weighed. The head 102 identifies the the product as being meat, fish, etc., by a symbol-bearing label. The data base 124 identifies the price per kg (lb.) of the identified product. The price is calculated by the system microprocessor. The printer 62 prints the name of the product, the price, the price per kg (lb.), etc., in alpha-numeric and/or machine-readable indicia, on an updated label which is then applied to the product over the original label. All of the above can be performed at a separate meat or fish counter in a supermarket, which counter is preferably remote from the checkout counter. The consumer thus knows the actual price of the product prior to reaching the checkout counter. At the checkout counter, the retail clerk need only scan the updated label with an electro-optical scanner, as described above, to complete the purchase of the product and expedite the checkout procedure (see FIG. 9).

In the embodiment of FIG. 4, the bendable arm 108 and the head 102, including the printer 62, are neither anchored to the base 104 nor the support surface 106, but, instead, are directly connected to the cash register terminal 112. The scale 132 is mounted separately on the countertop 106.

As described in the embodiments of FIGs. 3 and 4, the bendable arm 108, 202 enables the operator to specifically position the scanner head over the working surface so that the distance between the head and the products bearing the symbols to be scanned may be optimally adjusted. In practice, the operator will pass the articles bearing symbols to be scanned in a fairly rapid manner under the scanning head. The head will emit a laser beam scan pattern which covers the entire portion of the working surface so that the operator need not repetitively pass the article over a specific area such as an X-shaped slot formed in a countertop. Known slot-type scanners often require multiple passes of the article and symbol over a countertop slot in order to achieve an accurate registration of the symbol with respect to the scan pattern. Since the scan pattern in the present invention is, advantageously, a multi-directional pattern, there is a much higher probability that one of the scan lines will extend across the symbol regardless of the orientation of the article on the working surface.

Since the scanner workstation of FIGs. 3 and 4 is intended to operate in a hands-free mode, it is important that the scanning take place continuously. Therefore automatic object sensing is applied. When a bar code symbol is detected in the workstation, typically by interruption of an infrared beam, and correctly decoded, the data representative of the symbol is automatically entered into the POS terminal, and an indicator alerts the operator that a successful read has occurred. Although the scan lines will still continue to scan the bar code symbol on the article while the article is in the workstation, an inhibiting signal is generated after a successful read to prevent the same symbol from being read a multiple number of times.

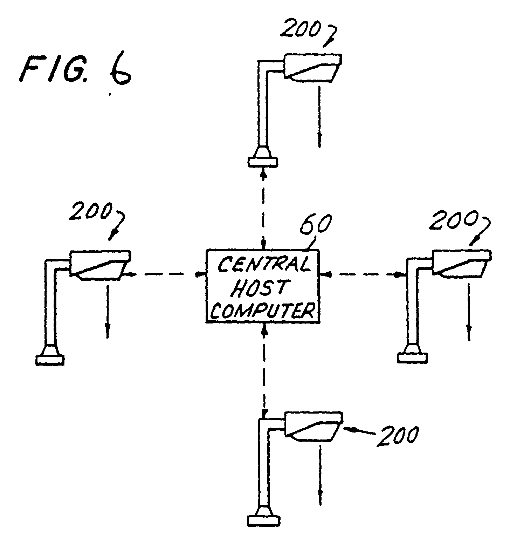

Turning now to FIG. 5, a hand-held head 150 having an on-board printer 62, and actuatable, just like head 10, by a trigger 28, is connected via a cable 152 to the cash register terminal 112. The head 150 may be held in one's hand and/or mounted in a stand 154 resting on the tabletop 106, or may be mounted, at least temporarily, in a cradle 156 extending outwardly from the side of the terminal 112. The scale 132 is positioned near-by on the support surface 106.

Each head or workstation described herein is preferably operative in three modes or operational states. The first, or so-called "sleep" mode, is an inactive state. The second, or so-called "aiming" mode, emits a pointing or aiming light beam to assist the operator in correctly orienting the product label. The aiming light beam can be a circular or elliptical beam spot, or a short linear sweep on the symbol. The third, or so-called "scanning" mode, emits a light beam which scans and reads the entire symbol.

As shown in FIG. 6, the host computer 60 can serve multiple heads or workstations such as workstations 200. Each workstation is independently operable to scan a product label, print an updated label, and enable an operator to apply the printed label on a product in a so-called "scan-print-apply" operation.

It is further advantageous if the aforementioned decode/control means 56,as well as all the other components in the head or workstation, are mounted on a single circuit board such as board 54. A number of things then become possible that are advantageous both during manufacturing and in use in the field. For example, the microprocessor 30 can control functions that otherwise might not be possible, or might require expensive hardware.

During manufacture of the head or workstation, for example, the microprocessor 30 could control such things as motor scan amplitude (or scan speed) and laser power. This would permit automatic adjustment of these settings to the proper levels, when placed in a fixture that can provide feedback to the scanner so that it will know when the settings are correct. This eliminates expensive and time-consuming human labor, and increases product reliability and consistency by eliminating human error.

With the microprocessor in control, scanning performance can be improved. Such things as gain of the analog amplifiers, motor speed, and digitizing thresholds can be varied by the microprocessor to help decode difficult-to-read symbols.

Some of these things can be varied with the decode/control means remote from the scanner, but it will increase the number of interconnections between the scanner and decode/control means which increases size and cost of interconnecting cables and connectors.

Other adjustments, such as laser power or motor speed, which are automatically set during manufacturing, require that the decode/control means and scanner be on one board, as the decoder will have learned the proper settings for its particular scanner, and so must never be connected to another scanner.

The decode/control means can control such functions by using digital-to-analog converters, digitally-controlled potentiometers or attenuators, analog switches, or whatever is appropriate for the function being controlled. Proper settings that are determined during manufacturing can be stored in non-volatile memory in the microprocessor so they can be restored each time the scanner is powered up.

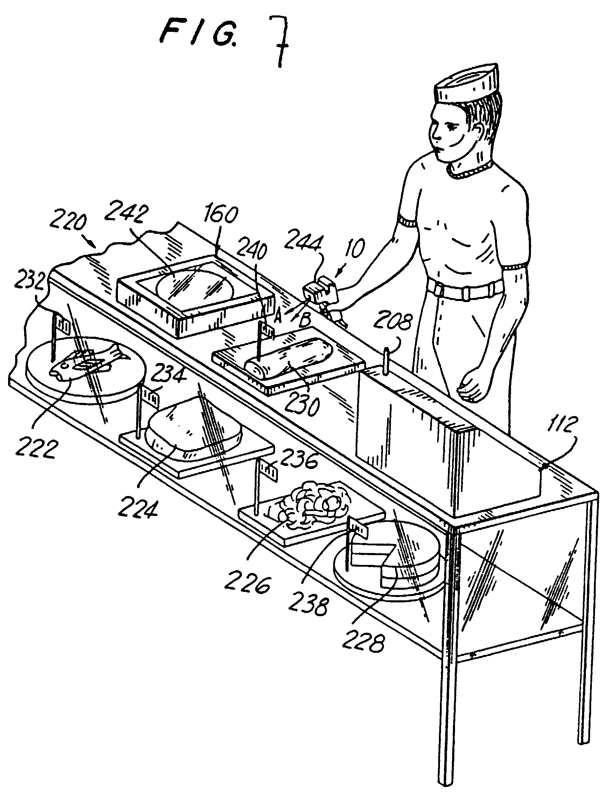

Turning now to FIG. 7, a point-of-sale counter 220,such as an appetizing counter, has a plurality of appetizing products such as fish 222, meat 224, potato salad 226, cheese 228, salami 230, just to mention a few exemplary choices. Each product is associated uniquely with a bar code symbol. For example, flags 232, 234, 236, 238, 240 bear unique coded symbols which, when electro-optically scanned, decoded and read, respectively identify the products 222, 224, 226, 228, 230.

The counter 220 also includes a cash register 112 and having an antenna 208, as well as a scale 160. A clerk stands behind the counter 220 and holds a scanner 10 of the type shown in FIG. 1.

In use, a customer walks up to the counter 220 and requests a portion 242 of a particular product, such as salami 230. The clerk weighs the portion on scale 160 and aims the scanner 10 at the flag 240 to advise the system that the product being weighed is, in fact, salami. It is this optical identification of the product which prevents operator error as is common with manual entry of product identification codes in known systems.

With the product and its weight known, the price per unit weight information is determined, and a label is printed.

The label is applied to the salami portion 242, typically on a paper wrapping therefor.

In a modification, the scanner 10 is provided with a slot 244 through which magnetically encoded credit cards are passed for the purpose of charging the customer's account, all at one location.

Inventory control is tightened with the arrangement described herein. Typically, the in-store processor (host computer) assigns a serial number to the product portion 242 being weighed. The processor then adds this information to the point-of-sale product file with the correct price. Once the product portion is scanned, the serial number is deleted from the product file.

It will be understood that each of the elements described above, or two or more together, also may find a useful application in other types of constructions differing from the types described above.

## Claims

1. An arrangement for processing products at a point-of-sale site, comprising:
(a) a host computer (60) having a database in which price per unit weight information relating to the products is stored;
(b) scale means (132) for weighing a selected one of the products;
(c) and a scanning means for scanning the selected one of the products;
(d) means for electro-optically reading indicia having parts of different light reflectivity associated with said selected one of the products being weighed to identify the latter;
(e) means for interrogating the database of the host computer on a real-time basis for the price per unit weight information on the identified product;
(f) means (62) for printing out price information based on the weight of the product as measured by the scale means and the price per unit weight information obtained from the host computer;
characterised in that:
the scanning means is a hand held or hand movable scanning head (10) which comprises:
said product identifying means;
said database interrogating means; and
said printing means (62), which latter is operative to print said price information on a label;
the scanning head further comprises edge means (65) disposed at the exterior of the scanning head means for use in removing said label from the scanning head means and applying the same to the selected one of the products.

2. An arrangement according to claim 1, wherein the scanning head means is supported by a bendable arm.

3. An arrangement according to claim 1, wherein the printing means includes a roll of labels, and a path for said labels from the roll over a print head means to an exit slot adjacent an end of the housing and adjacent said edge means.

4. An arrangement according to claim 1, wherein the means for electro-optically reading indicia includes means for directing a light beam to the indicia, means for detecting at least a portion of light of variable intensity reflected off the indicia over a field of view, means for scanning at least one of said light beam and said field of view, and means for processing electrical signals indicative of the detected light intensity into data descriptive of the indicia.

5. An arrangement according to claim 1, wherein the interrogating means includes an inter-connecting cable between the head and the host computer.

6. An arrangement according to claim 1, wherein the printing means is operative for printing sequential coded data indicative of the total number of printed labels.

7. An arrangement according to claim 1, wherein the printing means is operative for printing machine-readable characters on the printed label.

8. An arrangement according to claim 1, wherein the identifying means has an inactive state in which the indicia are not read, a standby state in which the indicia are oriented in a desired orientation, and a reading state in which the indicia are read.

9. An arrangement according to any preceding claim further comprising a keyboard incorporated in said scanning head means.

10. An arrangement according to any preceding claim further comprising a display (64) for displaying information incorporated in said scanning head means.

11. An arrangement according to claim 10 wherein said displayed information relates to said indicia (232,234,236,238,240) or said price information.

12. An arrangement according to claim 7 wherein said printing means is operative for printing bar code symbols.

13. An arrangement according to claim 12 wherein said apparatus further comprises a means for reading magnetically coded cards.

14. An arrangement according to claim 13 wherein said means for reading magnetically coded cards is used for the purpose of charging a customer's account.

15. An arrangement according to any of claims 1-13 which further comprises a tag deactivator.

16. An arrangement according to claim 13 or claim 14 wherein said aimable scanning head comprises a slot (244) for said means for reading magnetically coded cards.

## Patentansprüche

1. Anordnung zur Verarbeitung von Produkten an einer Verkaufsstelle, wobei folgendes vorgesehen ist:
(a) ein Host-Computer (60) mit einer Datenbank (Datenspeicher), in dem sich auf die Produkte beziehende Informationen hinsichtlich des Preises pro Einheit-Gewicht gespeichert ist;
(b) Wägemittel (132) zum Wiegen ausgewählter Produkte;
(c) Abtastmittel zum Abtasten ausgewählter Produkte;
(d) Mittel zum elektro-optischen Lesen von Anzeigemitteln mit Teilen unterschiedlicher Lichtreflektivität assoziiert mit dem ausgewählten der Produkte, die gewogen werden, um die Produkte zu identifizieren;
(e) Mittel zum Abfragen der Datenbank des Host-Computers in Realzeit für die Preis pro Einhet-Gewichtsinformation hinsichtlich des identifizierten Produkts;
(f) Mittel (62) zum Ausdrucken der Preisinformation basierend auf dem Gewicht des Prbdukts gemessen durch die Wägemittel und der Preis pro Einheit-Gewichtsinformation erhalten vom Host-Computer,
dadurch gekennzeichnet, daß
die Abtastmittel ein in der Hand zu haltender oder von Hand bewegbarer Abtastkopf (10) ein, der folgendes aufweist:
die erwähnten Produktidenifiziermittel;
die Datenbank-Abfragemittel; und
die Druckmittel (62), welch letzteren die Funktion, haben die Preisinformation auf ein Etikett aufdrucken;
wobei der Abtastkopf femer Kantenmittel (65) aufweist, angeordnet außen an den Abtastkopfmitteln zur Verwendung bei der Entfernung des Etiketts von den Abtastkopfmitteln und zur Aufbringung desselben auf ausgewählte der Produkte.

2. Anordnung nach Anspruch 1, wobei die Abtastkopfmittel von einem biegbaren Arm getragen werden.

3. Anordnung nach Anspruch 1, wobei die Druckmittel eine Rolle von Etiketten aufweisen und einen Pfad für die Etiketten, und zwar von der Rolle über die Druckkopfmittel zu einem Austrittsschlitz benachbart zu einem Ende des Gehäuses und benachbart zu den Kantenmitteln.

4. Anordnung nach Anspruch 1, wobei die Mittel zum elektro-optischen Lesen der Anzeigemittel Mittel aufweisen zum Leiten eines Lichtstrahls zu den Anzeigemitteln, Mittel zum Detektieren von mindestens einem Teil des Lichtes variabler Intensität reflektiert von den Anzeigemitteln über ein Gesichtsfeld hinweg, Mittel zum Tasten des Lichtstrahls und/oder des Gesichtsfeldes und Mittel zur Verarbeitung elektrischer Signale, die eine Anzeige der detektierten Lichtintensität bilden, und zwar in Daten, die die Anzeigemittel beschreiben.

5. Anordnung nach Anspruch 1, wobei die Abfragemittel ein Zwischenverbindungskabel aufweisen zwischen dem Kopf und dem Host-Computer.

6. Anordnung nach Anspruch 1, wobei die Druckmittel im Betrieb sequentiell kodierte Daten drucken, die eine Anzeige der Gesamtzahl der gedruckten Etiketten sind.

7. Anordnung nach Anspruch 1, wobei die Druckmittel im Betrieb maschinenlesbare Zeichen auf das gedruckte Etikett drucken.

8. Anordnung nach Anspruch 1, wobei die Identiftziermittel einen inaktiven Zustand besitzen, in dem die Anzeigemittel nicht gelesen werden, einen Standby-Zustand, in dem die Anzeigemittel in einer gewünschten Orientierung orientiert sind, und einen Lesezustand, in dem die Anzeigemittel gelesen werden.

9. Anordnung nach einem vorhergehenden Anspruch, wobei ferner eine Tastatur in die Abtastkopfmittel eingebaut ist.

10. Anordnung nach einem vorhergehenden Anspruch, wobei ferner eine Anzeige (64) zur Darstellung von Information in die Abtastkopfmittel eingebaut ist.

11. Anordnung nach Anspruch 10, wobei die angezeigte Information sich auf die Anzeigemittel (232, 234, 236, 238, 240) oder die Preisinformation bezieht.

12. Anordnung nach Anspruch 7, wobei die Druckmittel Barcodesymbole drukken.

13. Anordnung nach Anspruch 12, wobei die Vorrichtung femer Mittel zum Lesen von magnetisch kodierten Karten aufweist.

14. Anordnung nach Anspruch 13, wobei die Mittel zum Lesen magnetisch kodierter Karten zum Zwecke der Belastung eines Kundenkontos verwendet werden.

15. Anordnung nach einem der Ansprüche 1 bis 13, wobei ferner ein Tag- bzw. Kennzeichen-Deaktivator vorgesehen ist.

16. Anordnung nach Anspruch 13 oder 14, wobei der zielfähige Abtastkopf einen Schlitz (244) aufweist für die Mittel zum magnetischen Lesen der kodierten Karten.

## Revendications

1. Dispositif pour traiter des produits à un point de vente, comprenant :
(a) un ordinateur hôte (60) ayant une base de données dans laquelle est stockée une information de prix par unité de poids concernant les produits;
(b) un moyen de pesée (132) pour peser l'un sélectionné des produits;
(c) et un moyen de balayage pour effectuer un balayage de celui des produits qui est sélectionné;
(d) un moyen pour lire de façon électro-optique des marques ayant des parties dont la réflectivité pour la lumière est différente, associées au produit sélectionné qui est en cours de pesée, pour identifier ce dernier;
(e) un moyen pour interroger la base de données de l'ordinateur hôte, en temps réel, pour obtenir l'information de prix par unité de poids concernant le produit identifié;
(f) un moyen (62) pour imprimer une information de prix basée sur le poids du produit mesuré par le moyen de pesée, et sur l'information de prix par unité de poids qui est obtenue à partir de l'ordinateur hôte;
caractérisé en ce que :
le moyen de balayage est une tête de balayage (10) tenue à la main ou pouvant être déplacée à la main, qui comprend :
le moyen d'identification de produit;
le moyen d'interrogation de base de données; et
le moyen d'impression (62), ce dernier fonctionnant de façon à imprimer l'information de prix sur une étiquette;
la tête de balayage comprend en outre une structure d'arête (65) disposée à l'extérieur du moyen consistant en une tête de balayage, pour être utilisée dans l'opération consistant à détacher l'étiquette du moyen consistant en une tête de balayage, et à l'appliquer sur celui des produits qui est sélectionné.

2. Dispositif selon la revendication 1, dans lequel le moyen consistant en une tête de balayage est supporté par un bras pouvant être courbé.

3. Dispositif selon la revendication 1, dans lequel le moyen d'impression comprend un rouleau d'étiquettes, et un chemin pour les étiquettes, qui part du rouleau, passe sur une structure de tête d'impression et se dirige vers une fente de sortie adjacente à une extrémité du boîtier et adjacente à la structure d'arête.

4. Dispositif selon la revendication 1, dans lequel le moyen pour lire des marques de façon électro-optique comprend un moyen pour diriger un faisceau de lumière vers les marques, un moyen pour détecter au moins une partie de la lumière d'intensité variable qui est réfléchie par les marques sur un champ d'observation, un moyen pour déplacer avec un mouvement de balayage au moins un élément parmi le faisceau de lumière et le champ d'observation, et un moyen pour traiter des signaux électriques représentatifs de l'intensité lumineuse détectée, pour fournir des données descriptives des marques.

5. Dispositif selon la revendication 1, dans lequel le moyen d'interrogation comprend un câble d'interconnexion entre la tête et l'ordinateur hôte.

6. Dispositif selon la revendication 1, dans lequel le moyen d'impression fonctionne de façon à imprimer des données codées séquentielles représentatives du nombre total d'étiquettes imprimées.

7. Dispositif selon la revendication 1, dans lequel le moyen d'impression fonctionne de façon à imprimer sur l'étiquette imprimée des caractères lisibles par une machine.

8. Dispositif selon la revendication 1, dans lequel le moyen d'identification a un état inactif dans lequel les marques ne sont pas lues, un état d'attente dans lequel les marques sont orientées dans une orientation désirée, et un état de lecture dans lequel les marques sont lues.

9. Dispositif selon l'une quelconque des revendications précédentes, comprenant en outre un clavier incorporé dans le moyen consistant en une tête de balayage.

10. Dispositif selon l'une quelconque des revendications précédentes, comprenant en outre un élément de visualisation (64) pour visualiser une information incorporée dans le moyen consistant en une tête de balayage.

11. Dispositif selon la revendication 10, dans lequel l'information visualisée concerne les marques (232, 234, 236, 238, 240) ou l'information de prix.

12. Dispositif selon la revendication 7, dans lequel le moyen d'impression fonctionne de façon à imprimer des symboles consistant en codes à barres.

13. Dispositif selon la revendication 12, dans lequel l'appareil comprend en outre un moyen pour lire des cartes codées de façon magnétique.

14. Dispositif selon la revendication 13, dans lequel le moyen pour lire des cartes codées de façon magnétique est utilisé dans le but de débiter un compte de client.

15. Dispositif selon l'une quelconque des revendications 1-13, comprenant en outre un désactivateur de dispositif anti-vol.

16. Dispositif selon la revendication 13 ou la revendication 14, dans lequel la tête de balayage pouvant être pointée comprend une fente (244) pour le moyen pour lire des cartes codées de façon magnétique.
